# EUROPEAN PATENT APPLICATION

(11) **EP 4 468 749 A1**
(43) Date of publication of application: **27.11.2024**
(21) Application number: 22919547.4
(22) Date of filing: 17.01.2022

(54) **RESOURCE CONFLICT PROCESSING METHOD AND APPARATUS, AND READABLE STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2022/072417
(87) International publication number: WO 2023/133901

(57) **Abstract**

Provided in the present disclosure are a resource conflict processing method and apparatus, and a readable storage medium, which are applied to the technical field of wireless communications. The method comprises: determining at least one time domain unit corresponding to overlapping resources between resources used for retransmitting a first uplink message and resources of a physical bearer channel of a second uplink message, wherein the first uplink message is msg.3, the second uplink message is mse.1 or msg.A; and not sending the first uplink message and the second uplink message on the at least one time domain unit at the same time as a second user equipment. In the present disclosure, a time domain area corresponding to overlapping resources between resources used for retransmitting a first uplink message and resources of a physical bearer channel of a second uplink message is determined. and the current user does not send the first uplink message and the second uplink message in the time domain area at the same time as another user equipment, such that resource conflicts between different uplink messages are prevented, and interference in channel transmission of different user equipments is reduced, thereby improving the success rate of random access of the user equipments.

## Description

### TECHNICAL FIELD

The present disclosure relates to the field of wireless communication technology, in particular to a method and an apparatus for handling a resource collision, and a readable storage medium.

### BACKGROUND

In the wireless communication technology, for example, in the 5th generation (5G) mobile communication technology, a user equipment (UE) can use a four-step random access channel (RACH) procedure or a two-step RACH procedure for random access.

In some implementations, the four-step RACH procedure includes:
The UE sends a message 1 (i.e., msg. 1) to a base station, and the UE may send the message 1 using a preamble, which may be referred to as a RACH preamble, or a physical random access channel (PRACH) preamble or a sequence;
The UE receives a message 2 (i.e., msg.2) from the base station;
The UE sends a message 3 (i.e., msg.3) to the base station, in which the message 3 may be a message 3 of a radio resource control (RRC) connection request message in response to receiving the message 2 from the base station;
The UE receives a message 4 (i.e., msg.4) from the base station. In case that the base station successfully receives and/or decodes the message 3, the message 4 may be a contention resolution message from the base station;
The UE synchronizes with the base station using the four-step RACH procedure described above.

The two-step RACH procedure may combine a plurality of RACH messages from the four-step RACH procedure. For example, the two-step RACH procedure may include msg.A and msg.B, in which the msg.A combines the msg.1 and the msg.3 in the four-step RACH procedure, and the msg.B combines the msg.2 and the msg.4 in the four-step RACH procedure.

A plurality of blind retransmissions can be used for msg.3 (i.e., msg.3 repetition) to increase redundant bit information, reduce a bit rate, and improve the reliability of the transmission.

In order to ensure that the actual number of blind retransmissions is as consistent as possible with the number of retransmissions indicated by the base station, and to increase the probability of successful transmission, in some implementations, it is supported that blind retransmissions are counted based on available slots, rather than based on consecutive physical slots.

The msg.3 repetition transmission may conflict with the PRACH sent by other terminal or with a physical uplink shared channel (PUSCH) of the msg.A sent by other terminal, thus causing mutual interference between different channel transmissions of different terminals, which may ultimately lead to a random access failure of both terminals.

### SUMMARY

The present disclosure provides a method and an apparatus for handling a resource collision and a readable storage medium.

In a first aspect, a method for processing resource conflict is provided, performed by a first user equipment. The method includes: determining at least one time domain unit corresponding to an overlapping resource between a resource for repetitions of a first uplink message and a resource of a physical channel for a second uplink message, in which the first uplink message is msg.3 and the second uplink message is msg.1 or msg.A; and not sending the first uplink message and the second uplink message simultaneously with a second UE on the at least one time domain unit.

In the method, a time domain region corresponding to the overlapping resource is determined between the resource for repetitions of the first uplink message and the resource of the physical channel of the second uplink message, and the current UE does not send the first uplink message and the second uplink message simultaneously with the other UE on the time domain region, such that a resource collision between different uplink messages is prevented, interference between channel transmissions of different UEs is reduced, and a success rate of random access of the UEs is thus improved.

In some possible implementations, the method further includes: determining that an available time domain unit does not include the at least one time domain unit; determining the resource for repetitions of the first uplink message based on the available time domain unit, or calculating a number of the repetitions based on the available time domain unit; not sending the first uplink message and the second uplink message simultaneously with the second UE on the at least one time domain unit includes: not sending the first uplink message on the at least one time domain unit.

In some possible implementations, the method further includes: determining that an available time domain unit includes the at least one time domain unit; determining the resource for repetitions of the first uplink message based on the available time domain unit, or calculating a number of the repetitions based on the available time domain unit; not sending the first uplink message and the second uplink message simultaneously with the second UE on the at least one time domain unit includes: not sending the first uplink message on the at least one time domain unit.

In some possible implementations, determining the at least one time domain unit corresponding to the overlapping resource between the resource for repetitions of the first uplink message and the resource of the physical channel for the second uplink message includes: determining a first resource in a set of resources used for sending the second uplink message; and determining a second resource in the set of resources, in which a synchronization signal block (SSB) index mapped by the second resource is the same as a SSB index mapped by the first resource; and determining at least one time domain unit corresponding to an overlapping resource between the second resource and the resource for repetitions of the first uplink message.

In some possible implementations, the method further includes: receiving configuration information sent by a network device, in which the configuration information indicates the set of resources used for sending the second uplink message.

In some possible implementations, the method further includes: determining an invalid random access channel (RACH) occasion (RO) in the resource of the physical channel, in which the at least one time domain unit includes the invalid RO; not sending the first uplink message and the second uplink message simultaneously with the second UE on the at least one time domain unit includes: in response to the second UE not sending the second uplink message at the invalid RO, sending by the first UE, the first uplink message at the invalid RO.

In some possible implementations, determining the invalid RO in the resource of the physical channel includes: receiving an invalid resource mode from a network device, in which the invalid resource mode indicates the invalid RO.

In some possible implementations, an invalid resource mode is determined by the network device based on the invalid RO, a first RO resource is determined in a set of RO resources used by the first UE for sending the second uplink message, and a second RO resource in the set of RO resources is determined as the invalid RO, in which a SSB index mapped by the second RO resource is the same as a SSB index mapped by the first RO resource.

In some possible implementations, the physical channel for the second uplink message includes at least one of: a physical random access channel (PRACH), or a physical uplink shared channel (PUSCH).

In a second aspect, a method for handling a resource collision is provided, performed by a network device. The method includes: determining at least one time domain unit for a first UE corresponding to an overlapping resource between a resource for repetitions of a first uplink message and a resource of a physical channel for a second uplink message, in which the first uplink message is msg.3 and the second uplink message is msg. 1 or msg.A; and in response to not sending the first uplink message and the second uplink message simultaneously on the at least one time domain unit by the first UE and a second UE, receiving information sent by the first UE or the second UE on the at least one time domain unit.

In some possible implementations, the method further includes: determining that an available time domain unit for the first UE does not include the at least one time domain unit; and determining the resource for repetitions of the first uplink message based on the available time domain unit, or calculating a number of the repetitions based on the available time domain unit; receiving the information sent by the first UE or the second UE on the at least one time domain unit includes: not receiving the first uplink message from the first UE on the at least one time domain unit.

In some possible implementations, the method further includes: determining that an available time domain unit includes the at least one time domain unit; and determining the resource for repetitions of the first uplink message based on the available time domain unit, or calculating a number of the repetitions based on the available time domain unit; receiving the information sent by the first UE or the second UE on the at least one time domain unit includes: not receiving the first uplink message from the first UE on the at least one time domain unit.

In some possible implementations, determining the at least one time domain unit for the first UE corresponding to the overlapping resource between the resource for repetitions of the first uplink message and the resource of the physical channel for the second uplink message includes: determining a first resource in a set of resources used by the first UE for sending the second uplink message; and determining a second resource in the set of resources, in which a SSB index mapped by the second resource is the same as a SSB index mapped by the first resource; and determining at least one time domain unit corresponding to an overlapping resource between the second resource and the resource for repetitions of the first uplink message.

In some possible implementations, the method further includes: sending configuration information to the first UE, in which the configuration information indicates a set of resources used for sending the second uplink message.

In some possible implementations, the method further includes: determining an invalid RO in the resource of the physical channel, in which the at least one time domain unit includes the invalid RO; receiving the information sent by the first UE or the second UE on the at least one time domain unit includes: receiving the first uplink message from the first UE at the invalid RO and not receiving the second uplink message from the second UE at the invalid RO.

In some possible implementations, the method further includes: sending an invalid resource mode to the first UE, in which the invalid resource mode indicates the invalid RO.

In some possible implementations, the method further includes: determining a first RO resource in a set of RO resources used by the first UE for sending the second uplink message; and determining a second RO resource in the set of RO resources as an invalid RO, in which a SSB index mapped by the second RO resource is the same as a SSB index mapped by the first RO resource; and determining an invalid resource mode based on the invalid RO.

In some possible implementations, the physical channel for the second uplink message includes at least one of: a PRACH, or a PUSCH.

In a third aspect, a communication apparatus is provided. The communication apparatus may be used to execute the steps performed by the UE in the above-mentioned first aspect or any possible design of the first aspect. The UE may implement the functions in the above methods in the form of a hardware structure, a software module, or the hardware structure plus the software module.

When the communication apparatus described in the first aspect is implemented by the software module, the communication apparatus includes a transceiver module and a processing module.

The processing module is configured to determine at least one time domain unit corresponding to an overlapping resource between a resource for repetitions of a first uplink message and a resource of a physical channel for a second uplink message, in which the first uplink message is msg.3 and the second uplink message is msg.1 or msg.A;
The transceiver module is configured to not send the first uplink message and the second uplink message simultaneously with a second UE on the at least one time domain unit.

In a fourth aspect, a communication apparatus is provided. The communication apparatus may be used to execute the steps performed by the UE in the above-mentioned first aspect or any possible design of the first aspect. The UE may implement the functions in the above methods in the form of a hardware structure, a software module, or the hardware structure plus the software module.

When the communication apparatus described in the first aspect is implemented by the software module, the communication apparatus includes a transceiver module and a processing module.

The processing module is configured to determine at least one time domain unit for a first UE corresponding to an overlapping resource between a resource for repetitions of a first uplink message and a resource of a physical channel for a second uplink message, in which the first uplink message is msg.3 and the second uplink message is msg.1 or msg.A;
The transceiver module is configured to receive, in response to not sending the first uplink message and the second uplink message simultaneously on the at least one time domain unit by the first UE and the second UE, information sent by the first UE or the second UE on the at least one time domain unit.

In a fifth aspect, a communication device is provided, including a processor and a memory. The memory is configured to store a computer program; and the processor is configured to execute the computer program to implement the first aspect or any of the possible designs of the first aspect.

In a sixth aspect, a communication device is provided, including a processor and a memory. The memory is configured to store a computer program; and the processor is configured to execute the computer program to implement the second aspect or any of the possible designs of the second aspect.

In a seventh aspect, a computer-readable storage medium is provided having stored instructions (or computer programs, programs) which when called and executed by a computer, enables the computer to execute the first aspect or any possible design of the first aspect.

In an eighth aspect, a computer-readable storage medium is provided having stored instructions (or computer programs, programs) which when called and executed by a computer, enables the computer to execute the second aspect or any possible design of the second aspect.

It should be appreciated that the above general description and the subsequent detailed description are exemplary and explanatory only and do not limit the present disclosure.

### BRIEF DESCRIPTION OF THE DRAWINGS

The drawings described herein are used to provide further understanding of the embodiments of the present disclosure and constitute a part of the present disclosure. The schematic embodiments of the embodiments of the present disclosure and their descriptions are used to explain the embodiments of the present disclosure and do not constitute improper limitations on the embodiments of the present disclosure.

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is an architecture diagram of a wireless communication system according to an embodiment of the present disclosure.
FIG. 2 is a flowchart illustrating a method for handling a resource collision according to an exemplary embodiment.
FIG. 3 is a flowchart illustrating a method for handling a resource collision according to an exemplary embodiment.
FIG. 4 is a flowchart illustrating a method for handling a resource collision according to an exemplary embodiment.
FIG. 5 is a flowchart illustrating a method for handling a resource collision according to an exemplary embodiment.
FIG. 6 is a flowchart illustrating a method for handling a resource collision according to an exemplary embodiment.
FIG. 7 is a flowchart illustrating a method for handling a resource collision according to an exemplary embodiment.
FIG. 8 is a structure diagram illustrating an apparatus for handling a resource collision according to an exemplary embodiment.
FIG. 9 is a structure diagram illustrating a device for handling a resource collision according to an exemplary embodiment.
FIG. 10 is a structure diagram illustrating an apparatus for handling a resource collision according to an exemplary embodiment.
FIG. 11 is a structure diagram illustrating a device for handling a resource collision according to an exemplary embodiment.

### DETAILED DESCRIPTION

The embodiments of the present disclosure are now further described in conjunction with the accompanying drawings and specific implementations.

Reference will now be made in detail to the exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all possible implementations consistent with the embodiments of the present disclosure. Rather, they are merely examples of apparatuses and methods consistent with some aspects of the disclosure as recited in the accompanying claims.

Terms used in the embodiments of the present disclosure are for the purpose of describing specific embodiments only, and are not intended to limit the embodiments of the present disclosure. As used in the examples of this disclosure and the appended claims, the singular forms "a/an", "said" and "the" are also intended to include the plural forms unless the context clearly dictates otherwise. It should also be understood that the term "and/or" as used herein refers to and includes any and all possible combinations of one or more of the associated listed items.

It should be appreciated that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the word "if" as used herein may be interpreted as "upon" or "when" or "in response to a determination."

Embodiments of the present disclosure are described in detail below, and examples of the embodiments are illustrated in the accompanying drawings, throughout which the same or similar reference numbers indicate the same or similar elements. The embodiments described below with reference to the accompanying drawings are exemplary and are intended to be used to explain the present disclosure and are not to be construed as a limitation of the present disclosure.

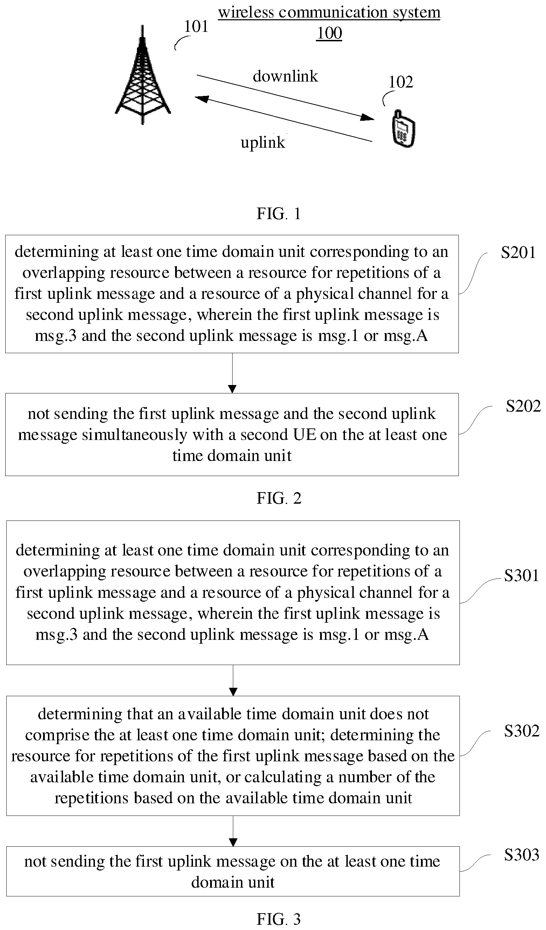

As shown in FIG. 1, a method for handling a resource collision according to an embodiment of the present disclosure may be applied to a wireless communication system 100, which may include but is not limited to a network device 101 and a user device 102. The user device 102 is configured to support carrier aggregation. The user device 102 may be connected to a plurality of carrier components of the network device 101, including a primary carrier component and one or more secondary carrier components.

It should be understood that the above wireless communication system 100 may be applied to both low-frequency scenarios and high-frequency scenarios. The application scenarios of the wireless communication system 100 include but are not limited to a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future fifth-generation (5G) system, a new radio (NR) communication system or a future evolved public land mobile network (PLMN) system, etc.

The user device 102 shown above may be a user equipment (UE), a terminal, an access terminal, a terminal unit, a terminal station, a mobile station (MS), a remote station, a remote terminal, a mobile terminal, a wireless communication device, or a terminal agent etc. The user device 102 may have a wireless transceiver function, and may communicate (such as wireless communication) with one or more network devices 101 in one or more communication systems, and receive network services provided by the network device 101. The network device 101 here includes but is not limited to the base station shown in the figure.

The user device 102 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, a vehicle-mounted device, a wearable device, a user device in a future 5G network, or a user device in a future evolved PLMN network, etc.

The network device 101 may be an access network device (or an access network node). The access network device refers to a device that provides network access functions, such as a radio access network (RAN) base station and the like. The network device may specifically include a base station (BS) device, or include a BS device and a radio resource management device for controlling the BS device, etc. The network device may also include a relay station (relay device), an access point, a base station in a future 5G network, a base station in a future evolved PLMN network, or an NR base station, etc. The network device may be a wearable device or a vehicle-mounted device. The network device may also be a communication chip having a communication module.

For example, the network device 101 includes but is not limited to: a next-generation base station (gnodeB, gNB) in 5G, an evolved node B (eNB) in an LTE system, a radio network controller (RNC), a node B (NB) in a WCDMA system, a wireless controller in a CRAN system, a base station controller (BSC), a base transceiver station (BTS) in a GSM system or a CDMA system, a home base station (for example, home evolved nodeB, or home node B, HNB), a baseband unit (BBU), a transmitting and receiving point (TRP), a transmitting point (TP) or a mobile switching center, etc.

The embodiments of the present disclosure provide a method for handling a resource collision, performed by a first UE. FIG. 2 is a flowchart illustrating a method for handling a resource collision according to an exemplary embodiment. As shown in FIG. 2, the method includes the following steps S201-S202.

At S201, at least one time domain unit corresponding to an overlapping resource is determined between a resource for repetitions of a first uplink message and a resource of a physical channel for a second uplink message, in which the first uplink message is a msg.3 and the second uplink message is a msg.1 or a msg.A.

At S202, the first uplink message and the second uplink message are not sent simultaneously with a second UE on the at least one time domain unit.

In some possible implementations, the time domain unit is a symbol, a half slot or a slot.

In some possible implementations, the physical channel for the second uplink message includes at least one of: a physical random access channel (PRACH), or a physical uplink shared channel ( PUSCH).

In some possible implementations, the second UE is any UE other than the first UE in a cell where the first UE is located.

In some possible implementations, the second UE is a UE other than the first UE that meets a set condition in the cell where the first UE is located.

In some possible implementations, a complete overlap is constituted between the resource for repetitions of the first uplink message and the resource of the physical channel for the second uplink message.

In some possible implementations, a partial overlap is constituted between the resource for repetitions of the first uplink message and the resource of the physical channel for the second uplink message.

In some possible implementations, the at least one time domain unit is consecutive time domain units.

In some possible implementations, the at least one time domain unit is inconsecutive time domain units.

In some possible implementations, the first uplink message is a first uplink random access message and the second uplink message is a second uplink random access message.

In embodiments of the present disclosure, a time domain region corresponding to the overlapping resource is determined between the resource for repetitions of the first uplink message and the resource of the physical channel of the second uplink message, and the current UE does not send the first uplink message and the second uplink message simultaneously with the other UE on the time domain region, such that a resource collision between different uplink messages is prevented, interference between channel transmissions of different UEs is reduced, and a success rate of random access of the UEs is thus improved.

The embodiments of the present disclosure provide a method for handling a resource collision, performed by a first UE. FIG. 3 is a flowchart illustrating a method for handling a resource collision according to an exemplary embodiment. As shown in FIG. 3, the method includes the following steps S301-S303.

At S301, at least one time domain unit corresponding to an overlapping resource is determined between a resource for repetitions of a first uplink message and a resource of a physical channel for a second uplink message, in which the first uplink message is a msg.3 and the second uplink message is a msg.1 or a msg.A.

At S302, it is determined that an available time domain unit does not include the at least one time domain unit; the resource for repetitions of the first uplink message is determined based on the available time domain unit, or a number of the repetitions is calculated based on the available time domain unit.

At S303, the first uplink message is not sent on the at least one time domain unit.

In some possible implementations, the time domain unit is a symbol, a half slot or a slot.

In some possible implementations, the physical channel for the second uplink message includes at least one of: a PRACH, or a PUSCH.

In some possible implementations, a complete overlap is constituted between the resource for repetitions of the first uplink message and the resource of the physical channel for the second uplink message.

In some possible implementations, a partial overlap is constituted between the resource for repetitions of the first uplink message and the resource of the physical channel for the second uplink message.

In some possible implementations, the at least one time domain unit is consecutive time domain units.

In some possible implementations, the at least one time domain unit is inconsecutive time domain units.

In some possible implementations, the first uplink message is a first uplink random access message and the second uplink message is a second uplink random access message.

In some possible implementations, determining the at least one time domain unit corresponding to the overlapping resource between the resource for repetitions of the first uplink message and the resource of the physical channel for the second uplink message at step S301 includes the following steps S301-1 to S301-3.

At S301-1, a first resource in a set of resources used for sending the second uplink message is determined.

At S301-2, a second resource in a set of resources is determined, in which a SSB index mapped by the second resource is the same as a SSB index mapped by the first resource is determined.

At S301-3, at least one time domain unit corresponding to an overlapping resource between the second resource and the resource for repetitions of the first uplink message is determined.

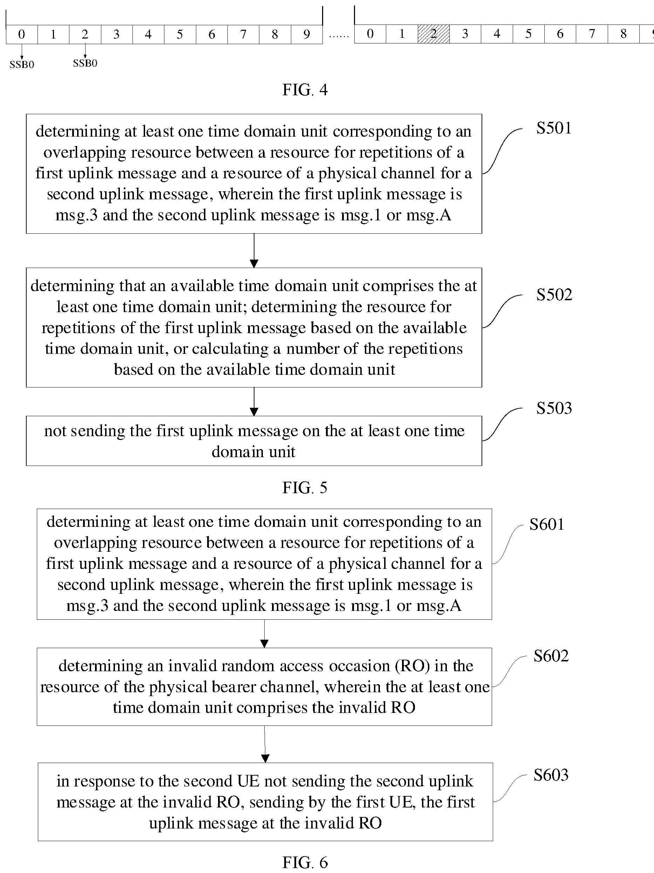

In an example, as shown in FIG. 4, the set of resources for sending a PRACH includes several time domain cycles, and eight ROs for initiating the PRACH within a cycle include RO#0, RO#1, RO#2 ......RO#7. RO#0 and RO#4 within each cycle are mapped to SSB#0. Based on the RO#0 within a certain cycle, the UE sends the PRACH, then an overlapping resource between the resource occupied by an RO within subsequent cycles of the set of resources with the same SSB index (SSB#0) as RO#0 selected by the UE for initiating the RACH and the resource of msg.3 repetitions, is determined as the at least one time domain unit.

In some possible implementations, the method further includes the step S301-0 before performing the step S301-1, i.e., receiving configuration information sent by a network device, in which the configuration information indicates a set of resources used for sending the second uplink message.

In some possible implementations, it is determined that the at least one time domain unit is an unavailable time domain unit for repetitions of the first uplink message. When the first UE determines the resource used for repetitions of the first uplink message and calculates a number of the repetitions, the unavailable time domain unit for repetitions of the first uplink message is not taken into account.

For example, when the time domain unit is a slot and the first uplink message is msg.3, it is determined that the at least one time slot corresponding to the overlapping resource is unavailable slots for repetitions of the first uplink message (i.e., unavailable slots for msg.3 repetitions). When the first UE determines the resource used for msg.3 repetitions and calculates a number of the repetitions, the unavailable slots for msg.3 repetitions are not taken into account.

For example, when the time domain unit is a symbol and the first uplink message is msg.3, it is determined that the at least one symbol corresponding to the overlapping resource is unavailable symbols for repetitions of the first uplink message (i.e., unavailable symbols for msg.3 repetitions). When the first UE determines the resource used for msg.3 repetitions and calculates a number of the repetitions, the unavailable symbols for msg.3 repetitions are not taken into account.

In embodiments of the present disclosure, the transmission of the second uplink message is caused to have a higher priority while the transmission of the first uplink message have a lower priority, it is determined that the time domain region corresponding to the overlapping resource is unavailable for repetitions of the first uplink message, the unavailable time domain region is not taken into account when determining the resource for repetitions of the first uplink message and calculating the number of repetitions, and the first uplink message is not sent on the at least one time domain unit, thus ensuring the accuracy of the parameter determination and the priority of a UE other than the first UE that smoothly sends the second uplink message. Furthermore, a resource collision between different uplink messages is prevented, interference between channel transmissions of different UEs is reduced, and a success rate of random access of the UEs is thus improved.

The embodiments of the present disclosure provide a method for handling a resource collision, performed by a first UE, and FIG. 5 is a flowchart illustrating a method for handling a resource collision according to an exemplary embodiment. As shown in FIG. 5, the method includes the following steps S501-S503.

At S501, at least one time domain unit corresponding to an overlapping resource is determined between a resource for repetitions of a first uplink message and a resource of a physical channel for a second uplink message, in which the first uplink message is a msg.3 and the second uplink message is a msg.1 or a msg.A.

At S502, it is determined that an available time domain unit includes the at least one time domain unit; the resource for repetitions of the first uplink message is determined based on the available time domain unit, or a number of the repetitions is calculated based on the available time domain unit.

At S503, the first uplink message is not sent on the at least one time domain unit.

In some possible implementations, the time domain unit is a symbol, a half slot or a slot.

In some possible implementations, the physical channel for the second uplink message includes at least one of: a PRACH, or a PUSCH.

In some possible implementations, a complete overlap is constituted between the resources for repetitions of the first uplink message and the resources of the physical channel for the second uplink message.

In some possible implementations, a partial overlap is constituted between the resources for repetitions of the first uplink message and the resources of the physical channel for the second uplink message.

In some possible implementations, the at least one time domain unit is consecutive time domain units.

In some possible implementations, the at least one time domain unit is inconsecutive time domain units.

In some possible implementations, the first uplink message is a first uplink random access message and the second uplink message is a second uplink random access message.

In some possible implementations, it is determined that the at least one time domain unit is an available time domain unit for repetitions of the first uplink message. When the first UE determines the resource used for repetitions of the first uplink message and calculates a number of the repetitions, the available time domain unit for repetitions of the first uplink message is taken into account, but the first uplink message is not sent on the at least one time domain unit.

For example: when the time domain unit is a slot and the first uplink message is msg.3, it is determined that the at least one time slot corresponding to the overlapping resource is available slots for repetitions of the first uplink message (i.e., available slots for msg.3 repetitions). When the first UE determines the resource used for msg.3 repetitions and calculates a number of the repetitions, the available slots for msg.3 repetitions are contained, but the msg.3 is not sent on the at least one time domain unit.

For example, when the time domain unit is a symbol and the first uplink message is msg.3, it is determined that the at least one symbol corresponding to the overlapping resource is available symbols for repetitions of the first uplink message (i.e., available symbols for msg.3 repetitions). When the first UE determines the resource used for msg.3 repetitions and calculates a number of the repetitions, the available symbols for msg.3 repetitions are taken into account, but the msg.3 is not sent on the at least one time domain unit.

In embodiments of the present disclosure, the transmission of the second uplink message is caused to have a higher priority but the transmission of the first uplink message have a lower priority, it is determined that the time domain region corresponding to the overlapping resource is available for repetitions of the first uplink message, the unavailable time domain region is still considered when determining the resource for repetitions of the first uplink message and calculating the number of repetitions, but the first uplink message is not sent on the at least one time domain unit, thus ensuring the compatibility with existing protocols and the priority of a UE other than the first UE that smoothly sends the second uplink message. Furthermore, a resource collision between different uplink messages is prevented, interference between channel transmissions of different UEs is reduced, and a success rate of random access of the UEs is thus improved.

The embodiments of the present disclosure provide a method for handling a resource collision, performed by a first UE. FIG. 6 is a flowchart illustrating a method for handling a resource collision according to an exemplary embodiment. As shown in FIG. 6, the method includes the following steps S601-S603.

At S601, at least one time domain unit corresponding to an overlapping resource is determined between a resource for repetitions of a first uplink message and a resource of a physical channel for a second uplink message, in which the first uplink message is a msg.3 and the second uplink message is a msg.1 or a msg.A.

At S602, an invalid RO in the resource of the physical channel is determined, in which the at least one time domain unit includes the invalid RO.

At S603, the first uplink message is sent by the first UE at the invalid RO, in response to the second UE not sending the second uplink message at the invalid RO.

In some possible implementations, the first UE in step S603 sends the first uplink message at the invalid RO but does not send the second uplink message at the invalid RO.

In some possible implementations, the time domain unit is a symbol, a half slot or a slot.

In some possible implementations, the physical channel for the second uplink message includes at least one of: a PRACH, or a PUSCH.

In some possible implementations, a complete overlap is constituted between the resource for repetitions of the first uplink message and the resource of the physical channel for the second uplink message.

In some possible implementations, a partial overlap is constituted between the resource for repetitions of the first uplink message and the resource of the physical channel for the second uplink message.

In some possible implementations, the at least one time domain unit is consecutive time domain units.

In some possible implementations, the at least one time domain unit is inconsecutive time domain unit.

In some possible implementations, determining the invalid RO in the resource of the physical channel in step S602 includes: receiving an invalid resource mode from a network device, in which the invalid resource mode indicates the invalid RO.

In some possible implementations, the invalid resource mode is determined by the network device based on the invalid RO. The network device determines a first RO resource in a set of RO resources used by the first UE for sending the second uplink message, and determines a second RO resource in the set of RO resources as the invalid RO, in which a SSB index mapped by the second RO resource is the same as a SSB index mapped by the first RO resource.

In some possible implementations, the invalid resource mode is determined by the network device based on the invalid RO. The network device determines a first RO resource in a set of RO resources used by the first UE for sending the second uplink message, and determines a second RO resource within a subsequent cycle in the set of RO resources as the invalid RO, in which a SSB index mapped by the second RO resource is the same as a SSB index mapped by the first RO resource.

In an example, the set of ROs for sending the PRACH of msg.A includes several time domain cycles, and the eight ROs for initiating the PRACH within a cycle include RO#0, RO#1, RO#2 ......RO#7. RO#0 and RO#4 within each cycle are mapped to SSB#0. Based on the RO#0 within a certain cycle, the UE sends the PRACH of msg.A, and then the network device determines RO#0 and RO#4 within the subsequent cycles of the set of ROs which have the same SSB index (SSB#0) as the RO#0 selected by the UE for initiating the RACH as the invalid ROs.

The embodiments of the present disclosure provide a method for determining an invalid RO, performed by a UE. The method includes: receiving an invalid resource mode from a network device, in which the invalid resource mode indicates an invalid RO. The invalid resource mode is determined by the network device based on the invalid RO. The network device determines a first RO resource in a set of RO resources used by the first UE for sending the second uplink message, and determines a second RO resource in the set of RO resources as the invalid RO, in which a SSB index mapped by the second RO resource is the same as the SSB index mapped by the first RO resource.

In an example, the set of ROs for sending the PRACH of msg.A includes several time domain cycles, and the eight ROs for initiating the PRACH within a cycle include RO#0, RO#1, RO#2 ......RO#7. RO#0 and RO#4 within each cycle are mapped to SSB#0. Based on the RO#0 of a certain cycle, the UE sends the PRACH of msg.A, and then the network device determines RO#0 and RO#4 within the subsequent cycles of the set of ROs which have the same SSB index (SSB#0) as the RO#0 selected by the UE for initiating the RACH as the invalid ROs.

The embodiments of the present disclosure provide a method for determining an invalid RO, performed by a UE. The method includes: receiving an invalid resource mode from a network device, in which the invalid resource mode indicates an invalid RO. The invalid resource mode is determined by the network device based on the invalid RO. The network device determines a first RO resource in a set of RO resources used by the first UE for sending the second uplink message, and determines a second RO resource within a subsequent cycle in the set of RO resources as the invalid RO, in which a SSB index mapped by the second RO resource is the same as a SSB index mapped by the first RO resource.

In an example, the set of ROs for sending the PRACH of msg.A includes several time domain cycles, and the eight ROs for initiating the PRACH within a cycle include RO#0, RO#1, RO#2 ......RO#7. RO#0 and RO#4 within each cycle are mapped to SSB#0. Based on the RO#0 of a certain cycle, the UE sends the PRACH of msg.A, and the network device then determines RO#0 and RO#4 within the subsequent cycles of the set of ROs which have the same SSB index (SSB#0) as the RO#0 selected by the UE for initiating the RACH as the invalid ROs.

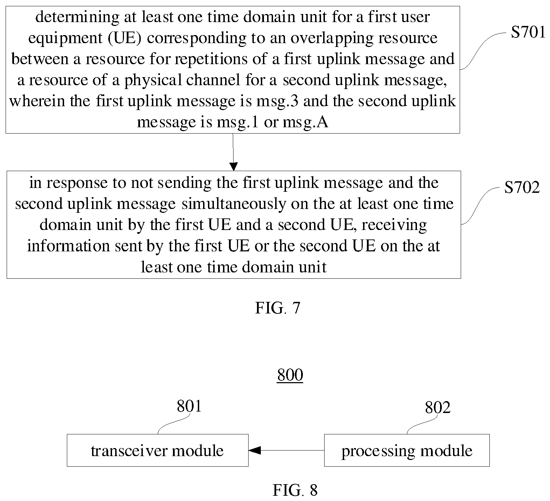

The embodiments of the present disclosure provide a method for handling a resource collision, performed by a network device. FIG. 7 is a flowchart illustrating a method for handling a resource collision according to an exemplary embodiment. As shown in FIG. 7, the method includes the following steps S701-S702.

At S701, at least one time domain unit for a first UE corresponding to an overlapping resource between a resource for repetitions of a first uplink message and a physical channel resource for a second uplink message. The first uplink message is msg.3 and the second uplink message is msg.1 or msg.A;
At S702, in response to not sending the first uplink message and the second uplink message simultaneously on the at least one time domain unit by the first UE and a second UE, information sent by the first UE or the second UE is received on the at least one time domain unit.

In some possible implementations, the time domain unit is a symbol, a half slot or a slot.

In some possible implementations, the physical channel for the second uplink message includes at least one of: a PRACH, or a PUSCH.

In some possible implementations, the second UE is any UE other than the first UE in a cell where the first UE is located.

In some possible implementations, the second UE is a UE other than the first UE that meets a set condition in the cell where the first UE is located.

In some possible implementations, a complete overlap is constituted between the resource for repetitions of the first uplink message and the resource of the physical channel for the second uplink message.

In some possible implementations, a partial overlap is constituted between the resource for repetitions of the first uplink message and the resource of the physical channel for the second uplink message.

In some possible implementations, the at least one time domain unit is consecutive time domain units.

In some possible implementations, the at least one time domain unit is inconsecutive time domain units.

In some possible implementations, the first uplink message is a first uplink random access message and the second uplink message is a second uplink random access message.

In embodiments of the present disclosure, a time domain region corresponding to the overlapping resource is determined between the resource for repetitions of the first uplink message and the resource of the physical channel of the second uplink message, and the current UE does not send the first uplink message and the second uplink message simultaneously with the other UE on the time domain region, such that a resource collision between different uplink messages is prevented, interference between channel transmissions of different UEs is reduced, and a success rate of random access of the UEs is thus improved.

The embodiments of the present disclosure provide a method for handling a resource collision, performed by a network device. The method includes: determining at least one time domain unit for a first UE corresponding to an overlapping resource between a resource for repetitions of a first uplink message and a resource of a physical channel for a second uplink message, in which the first uplink message is msg.3 and the second uplink message is msg.1 or msg.A; determining that an available time domain unit for the first UE does not include the at least one time domain unit; determining the resource for repetitions of the first uplink message based on the available time domain unit, or calculating a number of the repetitions based on the available time domain unit; and in response to not sending the first uplink message and the second uplink message simultaneously on the at least one time domain unit by the first UE and the second UE, not receiving the first uplink message from the first UE on the at least one time domain unit.

In some possible implementations, the physical channel for the second uplink message includes at least one of: a PRACH, or a PUSCH.

In some possible implementations, determining the at least one time domain unit for the first UE corresponding to the overlapping resource between the resource for repetitions of the first uplink message and the resource of the physical channel for the second uplink message includes the following steps 1 to 3.

At step 1, a first resource in a set of resources used by the first UE for sending the second uplink message is determined.

At step 2, a second resource in the set of resources is determined, in which a SSB index mapped by the second resource is the same as a SSB index mapped by the first resource.

At step 3, at least one time domain unit corresponding to an overlapping resource between the second resource and the resource for repetitions of the first uplink message is determined.

In some possible implementations, the method further includes: sending configuration information to the first UE, in which the configuration information indicates a set of resources used for sending the second uplink message.

The embodiments of the present disclosure provide a method for handling a resource collision, performed by a network device. The method includes: determining at least one time domain unit for a first UE corresponding to an overlapping resource between a resource for repetitions of a first uplink message and a resource of a physical channel for a second uplink message, in which the first uplink message is msg.3 and the second uplink message is msg.1 or msg.A; determining that an available time domain unit for the first UE includes the at least one time domain unit; determining the resource for repetitions of the first uplink message based on the available time domain unit, or calculating a number of the repetitions based on the available time domain unit; and not receiving the first uplink message from the first UE on the at least one time domain unit.

In some possible implementations, the physical channel for the second uplink message includes at least one of: a PRACH, or a PUSCH.

In some possible implementations, determining the at least one time domain unit for the first UE corresponding to the overlapping resource between the resource for repetitions of the first uplink message and the resource of the physical channel for the second uplink message includes the following steps 1 to 3.

At step 1, a first resource in a set of resources used by the first UE for sending the second uplink message is determined.

At step 2, a second resource in a set of resources is determined, in which a SSB index mapped by the second resource is the same as a SSB index mapped by the first resource.

At step 3, at least one time domain unit corresponding to an overlapping resource between the second resource and the resource for repetitions of the first uplink message is determined.

In some possible implementations, the method further includes: sending configuration information to the first UE, in which the configuration information indicates a set of resources used for sending the second uplink message.

The embodiments of the present disclosure provide a method for handling a resource collision, performed by a network device. The method includes: determining at least one time domain unit for a first UE corresponding to an overlapping resource between a resource for repetitions of a first uplink message and a resource of a physical channel for a second uplink message, in which the first uplink message is msg.3 and the second uplink message is msg.1 or msg.A; determining an invalid RO in the resource of the physical channel, in which the at least one time domain unit includes the invalid RO; and receiving the first uplink message from the first UE at the invalid RO and not receiving the second uplink message from the second UE at the invalid RO.

In some possible implementations, the physical channel for the second uplink message includes at least one of: a PRACH, or a PUSCH.

In some possible implementations, the method further includes: sending an invalid resource mode to the first UE, in which the invalid resource mode indicates the invalid RO.

In some possible implementations, the method further includes: determining a first RO resource in a set of RO resources used by the first UE for sending the second uplink message; and determining a second RO resource in the set of RO resources as an invalid RO, in which a SSB index mapped by the second RO resource is the same as a SSB index mapped by the first RO resource; and determining an invalid resource mode based on the invalid RO

The embodiments of the present disclosure provide a method for determining an invalid RO, performed by a network device. The method includes: determining a first RO resource in a set of RO resources used by the first UE for sending the second uplink message; and determining a second RO resource in the set of RO resources as an invalid RO, in which a SSB index mapped by the second RO resource is the same as a SSB index mapped by the first RO resource.

In an example, the set of ROs for sending the PRACH of msg.A includes several time domain cycles, and the eight ROs for initiating the PRACH within a cycle include RO#0, RO#1, RO#2 ......RO#7. RO#0 and RO#4 within each cycle are mapped to SSB#0. Based on the RO#0 of a certain cycle, the UE sends the PRACH of msg.A, and then the network device determines RO#0 and RO#4 within the subsequent cycles of the set of ROs which have the same SSB index (SSB#0) as the RO#0 selected by the UE for initiating the RACH, and RO#4, in the subsequent cycles of this set of RO as the invalid ROs.

The embodiments of the present disclosure provide a method for determining an invalid RO, performed by a network device. The method includes: determining a first RO resource in a set of RO resources used by the first UE for sending the second uplink message; determining a second RO resource within a subsequent cycle in the set of RO resources as an invalid RO, in which a SSB index mapped by the second RO resource is the same as a SSB index mapped by the first RO resource.

In an example, the set of ROs for sending the PRACH of msg.A includes several time domain cycles, and the eight ROs for initiating the PRACH within a cycle include RO#0, RO#1, RO#2 ......RO#7. RO#0 and RO#4 within each cycle are mapped to SSB#0. Based on the RO#0 of a certain cycle, the UE sends the PRACH of msg.A, and the network device then determines RO#0 and RO#4 within the subsequent cycles of the set of ROs which have the same SSB index (SSB#0) as the RO#0 selected by the UE for initiating the RACH as the invalid ROs.

Based on the same concept as the above method embodiments, the embodiments of the present disclosure also provides a communication apparatus, which may have the functions of the user device 102 in the above method embodiments and may be used to execute the steps performed by the user device 102 in the above method embodiments. The functions may be implemented in hardware, or software or hardware executing corresponding software. The hardware or software includes one or more modules corresponding to the above functions.

In a possible implementation, the communication apparatus 800 shown in FIG. 8 may be used as the user device 102 involved in the above method embodiments, and execute the steps performed by the user device 102 in the above method embodiments.

The communication apparatus 800 includes: a processing module 802 and a transceiver module 801.

The processing module 802 is configured to determine at least one time domain unit corresponding to an overlapping resource between a resource for repetitions of a first uplink message and a resource of a physical channel for a second uplink message, in which the first uplink message is msg.3 and the second uplink message is msg.1 or msg.A.

The transceiver module 801 is configured to not send the first uplink message and the second uplink message simultaneously with a second UE on the at least one time domain unit.

In a possible implementation, the processing module 802 is further configured to determine an available time domain unit does not include the at least one time domain unit; determine the resource for repetitions of the first uplink message based on the available time domain unit, or calculate a number of the repetitions based on the available time domain unit. The transceiver module 801 is configured to not send the first uplink message on the at least one time domain unit.

In a possible implementation, the processing module 802 is further configured to determine an available time domain unit includes the at least one time domain unit; determine the resource for repetitions of the first uplink message based on the available time domain unit, or calculate a number of the repetitions based on the available time domain unit. The transceiver module 801 is configured to not send the first uplink message on the at least one time domain unit.

In a possible implementation, the processing module 802 is further configured to determine a first resource in a set of resources used for sending the second uplink message; determine a second resource in a set of resources, in which a SSB index mapped by the second resource is the same as a SSB index mapped by the first resource; determine at least one time domain unit corresponding to an overlapping resource between the second resource and the resource for repetitions of the first uplink message.

In a possible implementation, the transceiver module 801 is further configured to receive configuration information sent by a network device, in which the configuration information indicates a set of resources used for sending the second uplink message.

In a possible implementation, the processing module 802 is further configured to determine an invalid RO in the resource of the physical channel, in which the at least one time domain unit includes the invalid RO; the transceiver module 801 is further configured to, in response to the second UE not sending the second uplink message at the invalid RO, send by the first UE, the first uplink message at the invalid RO and not send the second uplink message at the invalid RO.

In a possible implementation, the transceiver module 801 is further configured to receive an invalid resource mode from a network device, in which the invalid resource mode indicates the invalid RO.

In a possible implementation, an invalid resource mode is determined by the network device based on the invalid RO, a first RO resource is determined in a set of RO resources used by the first UE for sending the second uplink message, and a second RO resource in the set of RO resources is determined as the invalid RO, in which a SSB index mapped by the second RO resource is the same as a SSB index mapped by the first RO resource.

In a possible implementation, the physical channel for the second uplink message includes at least one of: PRACH, or PUSCH.

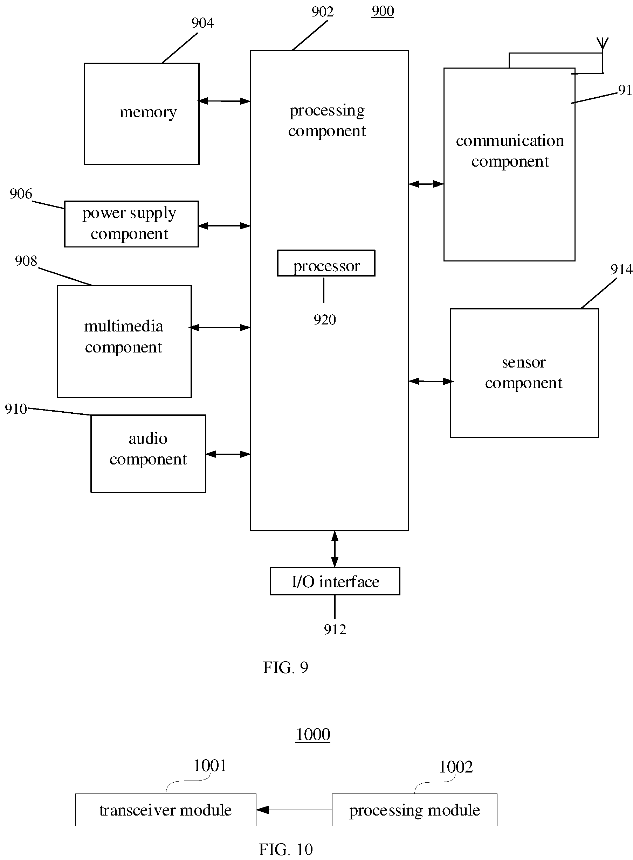

When the communication apparatus is a UE, its structure may also be as shown in FIG. 900. FIG. 9 is a structure diagram illustrating a device 900 for handling a resource collision according to an exemplary embodiment. For example, the device 900 may be a cell phone, a computer, a digital broadcast terminal, a message transceiver device, a game console, a tablet device, a medical device, a fitness device, a personal digital assistant, and the like.

Referring to FIG. 9, the device 900 may include one or more of the following components: a processing component 902, a memory 904, a power supply component 906, a multimedia component 908, an audio component 910, an input/output (I/O) interface 912, a sensor component 914, and a communication component 916.

The processing component 902 generally controls overall operations of the device 900, such as operations associated with display, telephone calls, data communications, camera operations, and recording operations. The processing component 902 may include one or more processors 920 to execute instructions to complete all or part of the steps of the above method. In addition, the processing component 902 may include one or more modules to facilitate interactions between the processing component 902 and other components. For example, the processing component 902 may include a multimedia module to facilitate interactions between the multimedia component 908 and the processing component 902.

The memory 904 is configured to store various types of data to support operations at the device 900. Examples of such data include instructions for any application or method operating on the device 900, contact data, phonebook data, messages, pictures, videos, etc. The memory 904 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power supply component 906 provides powers to various components of the device 900. The power supply component 906 may include a power management system, one or more power supplies, and other components associated with generating, managing, and distributing powers for the device 900.

The multimedia component 908 includes a screen that provides an output interface between the device 900 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 908 includes a front-facing camera and/or a rear-facing camera. When the device 900 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capabilities.

The audio component 910 is configured to output and/or input audio signals. For example, the audio component 910 includes a microphone (MIC), which is configured to receive external audio signals when the device 900 is in an operating mode, such as a call mode, a recording mode, and a voice recognition mode. The received audio signal may be further stored in the memory 904 or transmitted via the communication component 916. In some embodiments, the audio component 910 also includes a speaker for outputting audio signals.

The I/O interface 912 provides an interface between the processing component 902 and a peripheral interface module, which may be a keyboard, a click wheel, a button, etc. The button may include, but is not limited to: a home button, volume buttons, a start button, and a lock button.

The sensor component 914 includes one or more sensors for providing status assessment of various aspects for the device 900. For example, the sensor component 914 may detect an open/closed state of the device 900, a relative positioning of components, such as a display and a keypad of device 900. The sensor component 914 may also detect position changes of the device 900 or a component of the device 900, a presence or absence of user contacts with the device 900, an orientation or an acceleration/deceleration of the device 900 and temperature changes of the device 900. The sensor component 914 may include a proximity sensor configured to detect a presence of a nearby object without any physical contact. The sensor component 914 may also include a light sensor, such as a CMOS or CCD image sensor, for use in imaging applications. In some embodiments, the sensor component 914 may also include an acceleration sensor, a gyroscope sensor, a magnetic sensor, a pressure sensor, or a temperature sensor.

The communication component 916 is configured to facilitate wired or wireless communication between the device 900 and other devices. The device 900 may access a wireless network based on a communication standard, such as WiFi, 4G or 5G, or their combination. In an exemplary embodiment, the communication component 916 receives a broadcast signal or broadcast-related information from an external broadcast management system via a broadcast channel. In an exemplary embodiment, the communication component 916 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the device 900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned methods.

In an exemplary embodiment, a non-transitory computer-readable storage medium including instructions is also provided, such as the memory 904 including instructions. The above instructions may be executed by the processor 920 of the device 900 to perform the above method. For example, the non-transitory computer-readable storage medium may be a ROM, a random access memory (RAM), a CD-ROM, a magnetic tape, a floppy disk, an optical data storage device, and the like.

Based on the same concept as the above method embodiments, the embodiments of the present disclosure also provide a communication apparatus, which may have the functions of the network device 101 in the above method embodiments and may be used to execute the steps performed by the network device 101 in the above method embodiments. The functions may be implemented in hardware, or software or hardware executing corresponding software. The hardware or software includes one or more modules corresponding to the above functions.

In a possible implementation, the communication apparatus 1000 shown in FIG. 10 may be used as the network device 101 involved in the above method embodiments, and execute the steps performed by the network device 101 in the above method embodiments.

A processing module 1002 is configured to determine at least one time domain unit for a first user equipment (UE) corresponding to an overlapping resource between a resource for repetitions of a first uplink message and a resource of a physical channel for a second uplink message, wherein the first uplink message is msg.3 and the second uplink message is msg. 1 or msg.A.

A transceiver module 1001 is configured to receive, in response to not sending the first uplink message and the second uplink message simultaneously on the at least one time domain unit by the first UE and the second UE, information sent by the first UE or the second UE on the at least one time domain unit.

In a possible implementation, the processing module 1002 is further configured to determine that an available time domain unit corresponding to the first UE does not include the at least one time domain unit; determine the resource for repetitions of the first uplink message based on the available time domain unit, or calculate a number of the repetitions based on the available time domain unit; the transceiver module 1001 is configured to not receive the first uplink message from the first UE on the at least one time domain unit.

In a possible implementation, the processing module 1002 is further configured to determine that an available time domain unit includes the at least one time domain unit; determine the resource for repetitions of the first uplink message based on the available time domain unit, or calculate a number of the repetitions based on the available time domain unit; the transceiver module 1001 is configured to not receive the first uplink message from the first UE on the at least one time domain unit.

In a possible implementation, the processing module 1002 is further configured to determine a first resource in a set of resources used by the first UE for sending the second uplink message; determine a second resource in a set of resources, in which a SSB index mapped by the second resource is the same as a SSB index mapped by the first resource; determine at least one time domain unit corresponding to an overlapping resource between the second resource and the resource for repetitions of the first uplink message.

In a possible implementation, the transceiver module 1001 is further configured to send configuration information to the first UE, in which the configuration information indicates a set of resources used for sending the second uplink message.

In a possible implementation, the processing module 1002 is further configured to determine an invalid RO in the resource of the physical channel, in which the at least one time domain unit includes the invalid RO; the transceiver module 1001 is further configured to receive the first uplink message from the first UE at the invalid RO and not receive the second uplink message from the second UE at the invalid RO.

In a possible implementation, the transceiver module 1001 is further configured to send an invalid resource mode to the first UE, in which the invalid resource mode indicates the invalid RO.

In a possible implementation, the processing module 1002 is further configured to determine a first RO resource in a set of RO resources used by the first UE for sending the second uplink message; determine a second RO resource in the set of RO resources as an invalid RO, in which a SSB index mapped by the second RO resource is the same as a SSB index mapped by the first RO resource; and determine a invalid resource mode based on the invalid RO.

In a possible implementation, the physical channel for the second uplink message includes at least one of: a PRACH, or a PUSCH.

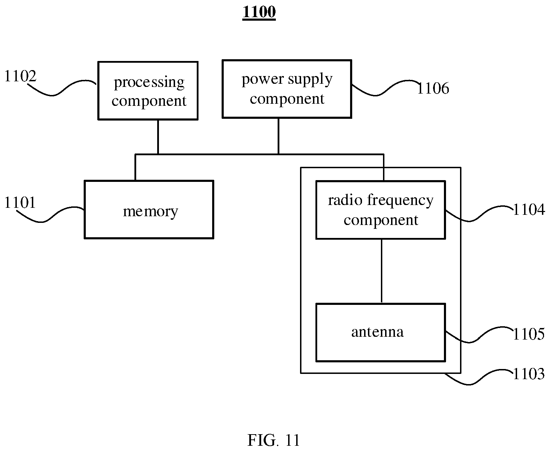

When the communication apparatus is a network device , its structure may also be as shown in FIG. 11. The structure of the communication apparatus is described by taking a network device 101 being a base station as an example. As shown in FIG. 11, the device 1100 includes a memory 1101, a processor 1102, a transceiver component 1103, and a power supply component 1106. The memory 1101 is coupled to the processor 1102 and may be used to store programs and data necessary for the communication device 1100 to implement various functions. The processor 1102 is configured to support the communication device 1100 to execute corresponding functions in the above methods, and the functions may be implemented by calling the programs stored in the memory 1101. The transceiver component 1103 may be a wireless transceiver, which may be used to support the communication device 1100 to receive signaling and/or data, and send signaling and/or data through a radio interface. The transceiver component 1103 may also be referred to as a transceiver unit or a communication unit. The transceiver component 1103 may include a radio frequency (RF) component 1104 and one or more antennas 1105. The RF component 1104 may be a remote radio unit (RRU), which may be specifically used for transmission of RF signals and conversion of the RF signals into baseband signals. The one or more antennas 1105 may be specifically used for radiation and reception of the RF signals.

When the communication device 1100 needs to send data, the processor 1102 may perform baseband processing on data to be sent and output a baseband signal to the RF component. The RF component performs RF processing on the baseband signal and then sends a RF signal in the form of electromagnetic waves through the antenna. When data is sent to the communication device 1100, the RF component receives a RF signal through the antenna, converts the RF signal into a baseband signal, and outputs the baseband signal to the processor 1102. The processor 1102 converts the baseband signal into data and processes the data.

Other implementations of the embodiments of the disclosure may be apparent to those skilled in the art from consideration of the specification and practice of the invention disclosed herein. This invention is intended to cover any modifications, uses or adaptive changes of the embodiments of the present disclosure, which follow the general principles of the embodiments of the present disclosure and include common knowledge or conventional technical means in the technical field that are not disclosed in the present disclosure. It is intended that the specification and examples be considered as exemplary only, with a true scope and spirit of the embodiments of the disclosure being indicated by the following claims.

It should be understood that the embodiments of the present disclosure are not limited to the exact structures that have been described above and shown in the drawings, and that various modifications and changes may be made without departing from the scope of the disclosure. The scope of the embodiments of the disclosure is limited only by the appended claims.

### Industrial Applicability

A time domain region corresponding to the overlapping resource is determined between the resource for repetitions of the first uplink message and the resource of the physical channel of the second uplink message, and the current UE does not send the first uplink message and the second uplink message simultaneously with the other UE on the time domain region, such that a resource collision between different uplink messages is prevented, interference between channel transmissions of different UEs is reduced, and a success rate of random access of the UEs is thus improved.

## Claims

1. A method for handling a resource collision, performed by a first user equipment (UE), comprises:
determining at least one time domain unit corresponding to an overlapping resource between a resource for repetitions of a first uplink message and a resource of a physical channel for a second uplink message, wherein the first uplink message is msg.3 and the second uplink message is msg.1 or msg.A; and
not sending the first uplink message and the second uplink message simultaneously with a second UE on the at least one time domain unit.

2. The method according to claim 1, further comprising:
determining that an available time domain unit does not comprise the at least one time domain unit; determining the resource for repetitions of the first uplink message based on the available time domain unit, or calculating a number of the repetitions based on the available time domain unit;
wherein not sending the first uplink message and the second uplink message simultaneously with the second UE on the at least one time domain unit comprises:
not sending the first uplink message on the at least one time domain unit.

3. The method according to claim 1, further comprising:
determining that an available time domain unit comprises the at least one time domain unit; determining the resource for repetitions of the first uplink message based on the available time domain unit, or calculating a number of the repetitions based on the available time domain unit;
wherein not sending the first uplink message and the second uplink message simultaneously with the second UE on the at least one time domain unit comprises:
not sending the first uplink message on the at least one time domain unit.

4. The method according to claim 2 or 3, wherein determining the at least one time domain unit corresponding to the overlapping resource between the resource for repetitions of the first uplink message and the resource of the physical channel for the second uplink message comprises:
determining a first resource in a set of resources used for sending the second uplink message; and
determining a second resource in the set of resources, wherein a synchronization signal block (SSB) index mapped by the second resource is the same as a SSB index mapped by the first resource; and
determining at least one time domain unit corresponding to an overlapping resource between the second resource and the resource for repetitions of the first uplink message.

5. The method according to claim 4, further comprising:
receiving configuration information sent by a network device, wherein the configuration information indicates the set of resources used for sending the second uplink message.

6. The method according to claim 1, further comprising: determining an invalid random access channel (RACH) occasion (RO) in the resource of the physical channel, wherein the at least one time domain unit comprises the invalid RO;
wherein not sending the first uplink message and the second uplink message simultaneously with the second UE on the at least one time domain unit comprises:
in response to the second UE not sending the second uplink message at the invalid RO, sending by the first UE, the first uplink message at the invalid RO.

7. The method according to claim 6, wherein determining the invalid RO in the resource of the physical channel comprises:
receiving an invalid resource mode from a network device, wherein the invalid resource mode indicates the invalid RO.

8. The method according to claim 6, wherein an invalid resource mode is determined by the network device based on the invalid RO,
a first RO resource is determined in a set of RO resources used by the first UE for sending the second uplink message, and a second RO resource in the set of RO resources is determined as the invalid RO, wherein a synchronization signal block (SSB) index mapped by the second RO resource is the same as a SSB index mapped by the first RO resource.

9. The method according to any one of claims 1 to 8, wherein the physical channel for the second uplink message comprises at least one of: a physical random access channel (PRACH), or a physical uplink shared channel (PUSCH).

10. A method for handling a resource collision, performed by a network device, comprises:
determining at least one time domain unit for a first user equipment (UE) corresponding to an overlapping resource between a resource for repetitions of a first uplink message and a resource of a physical channel for a second uplink message, wherein the first uplink message is msg.3 and the second uplink message is msg.1 or msg.A; and
in response to not sending the first uplink message and the second uplink message simultaneously on the at least one time domain unit by the first UE and a second UE, receiving information sent by the first UE or the second UE on the at least one time domain unit.

11. The method according to claim 10, further comprising:
determining that an available time domain unit for the first UE does not comprise the at least one time domain unit; and
determining the resource for repetitions of the first uplink message based on the available time domain unit, or calculating a number of the repetitions based on the available time domain unit;
wherein receiving the information sent by the first UE or the second UE on the at least one time domain unit comprises:
not receiving the first uplink message from the first UE on the at least one time domain unit.

12. The method according to claim 10, further comprising:
determining that an available time domain unit comprises the at least one time domain unit; and
determining the resource for repetitions of the first uplink message based on the available time domain unit, or calculating a number of the repetitions based on the available time domain unit;
wherein receiving the information sent by the first UE or the second UE on the at least one time domain unit comprises:
not receiving the first uplink message from the first UE on the at least one time domain unit.

13. The method according to claim 10 or 11, wherein determining the at least one time domain unit for the first UE corresponding to the overlapping resource between the resource for repetitions of the first uplink message and the resource of the physical channel for the second uplink message, comprises:
determining a first resource in a set of resources used by the first UE for sending the second uplink message; and
determining a second resource in the set of resources, wherein a synchronization signal block (SSB) index mapped by the second resource is the same as a SSB index mapped by the first resource; and
determining at least one time domain unit corresponding to an overlapping resource between the second resource and the resource for repetitions of the first uplink message.

14. The method according to claim 13, further comprising: sending configuration information to the first UE, wherein the configuration information indicates a set of resources used for sending the second uplink message.

15. The method according to claim 10, further comprising:
determining an invalid random access channel (RACH) occasion (RO) in the resource of the physical channel, wherein the at least one time domain unit comprises the invalid RO;
wherein receiving the information sent by the first UE or the second UE on the at least one time domain unit comprises:
receiving the first uplink message from the first UE at the invalid RO and not receiving the second uplink message from the second UE at the invalid RO.

16. The method according to claim 15, further comprising:
sending an invalid resource mode to the first UE, wherein the invalid resource mode indicates the invalid RO.

17. The method according to claim 15, further comprising:
determining a first RO resource in a set of RO resources used by the first UE for sending the second uplink message; and
determining a second RO resource in the set of RO resources as an invalid RO, wherein a synchronization signal block (SSB) index mapped by the second RO resource is the same as a SSB index mapped by the first RO resource; and
determining an invalid resource mode based on the invalid RO.

18. The method according to any one of claims 9 to 17, wherein the physical channel for the second uplink message comprises at least one of: a physical random access channel (PRACH), or a physical uplink shared channel (PUSCH).

19. A communication apparatus, provided in a user equipment (UE), comprises:
a processing module, configured to determine at least one time domain unit corresponding to an overlapping resource between a resource for repetitions of a first uplink message and a resource of a physical channel for a second uplink message, wherein the first uplink message is msg.3 and the second uplink message is msg.1 or msg.A; and
a transceiver module, configured to not send the first uplink message and the second uplink message simultaneously with a second UE on the at least one time domain unit.

20. A communication apparatus, provided in a network device, comprises:
a processing module, configured to determine at least one time domain unit for a first user equipment (UE) corresponding to an overlapping resource between a resource for repetitions of a first uplink message and a resource of a physical channel for a second uplink message, wherein the first uplink message is msg.3 and the second uplink message is msg.1 or msg.A; and
a transceiver module, configured to receive, in response to not sending the first uplink message and the second uplink message simultaneously on the at least one time domain unit by the first UE and the second UE, information sent by the first UE or the second UE on the at least one time domain unit.

21. A communication device, provided in a user equipment, comprising:
a memory storing a computer program; and
a processor, configured to execute the computer program to implement the method according to any one of claims 1 to 9.

22. A communication device, comprising:
a memory storing a computer program; and
a processor, configured to execute the computer program to implement the method according to any one of claims 10 to 18.

23. A computer-readable storage medium having instructions stored thereon, which, when called and executed by a computer, enables the computer to execute the method according to any one of claims 1 to 9.

24. A computer-readable storage medium having instructions stored thereon, which, when called and executed by a computer, enables the computer to execute the method according to any one of claims 10 to 18.
